# EUROPÄISCHE PATENTANMELDUNG

(11) **EP 1 722 036 A2**
(43) Veröffentlichungstag der Anmeldung: **15.11.2006**
(21) Anmeldenummer: 06009636.9
(22) Anmeldetag: 10.05.2006
(51) Int. Cl.: E01C 19/38, E01C 19/28

(54) **Bodenverdichtungsgerät**

(30) Priorität: 11.05.2005 DE 102005022627
(71) Anmelder: Ammann Verdichtung GmbH, 53773 Hennef (DE)
(72) Erfinder: Heesen, Stefan, 53773 Hennef (DE); Drees, Ulrich, 59063 Hamm (DE)
(74) Vertreter: Bauer, Dirk

(57) **Zusammenfassung**

Die Erfindung stellt ein Bodenverdichtungsgerät (1) vor, mit einem Verbrennungsmotor, einer von diesem antreibbaren Hydraulikpumpe (2), einem Hydraulikmotor (23), der von der Hydraulikpumpe (2) über eine Hauptleitung (7) mit Hydraulikflüssigkeit versorgbar ist und mit dem ein Schwingungserreger antreibbar ist, mit dem das Bodenverdichtungsgerät (1) in Schwingungen versetzbar ist, welches eine verkürzte Umschaltzeit in andere Betriebszustände dadurch erreicht, dass ein Stromregelventil (10) benutzt wird, das in der Hauptleitung (7) zwischen der Hydraulikpumpe (2) und dem Hydraulikmotor (23) angeordnet ist und mittels dem der dem Hydraulikmotor (23) zugeführte Volumenstrom der Hydraulikflüssigkeit veränderbar ist.

## Beschreibung

Die Erfindung betrifft ein Bodenverdichtungsgerät, insbesondere eine Verdichtungsplatte, mit einem internen oder externen Antriebsaggregat, insbesondere einem Verbrennungsmotor, einer von diesem antreibbaren Hydraulikpumpe, einem Hydraulikmotor, der von der Hydraulikpumpe über eine Hauptleitung mit Hydraulikflüssigkeit versorgbar ist und mit dem ein Schwingungserreger antreibbar ist, mit dem das Bodenverdichtungsgerät in Schwingungen versetzbar ist.

Die Leistung des Hydraulikmotors und des davon angetriebenen Schwingungserregers und damit die ausgeführten Schwingungen des Bodenverdichtungsgerätes bestimmen sich bekanntermaßen, wie beispielsweise bei den Bodenverdichtungsgeräten der Firma Ammann in Form von Vibrationswalzen, Stampfern, Anbauverdichtern und Walzenzügen, in erster Linie durch den von der Hydraulikpumpe umgesetzten Volumenstrom und damit durch die Drehzahl des diese antreibenden Verbrennungsmotors, solange keine Drehzahldifferenz zwischen Verbrennungsmotor und Hydraulikpumpe besteht. Eine Veränderung der Drehzahl des Verbrennungsmotors führt unmittelbar zu einer entsprechenden Änderung der Drehzahl des Hydraulikmotors. Die Schwingungen des Bodenverdichtungsgerätes können durch eine Drehzahlregulierung des Verbrennungsmotors unmittelbar gesteuert werden.

Es ist bei Verdichtungsplatten lediglich bekannt, dass mehrere Betriebszustände, meist allerdings nur zwei, etwa ein Ruhezustand, bei dem der Erreger stillsteht, und ein erster Normalbetriebszustand, bei dem der Erreger mit maximaler Leistung angetrieben ist, eingenommen werden. Bei Vibrationswalzen ist es hingegen auch bekannt, eine hinsichtlich ihres Volumenstroms regelbare Hydraulikpumpe zu verwenden, um auch bei konstanter Drehzahl des Antriebsaggregats und der Pumpe die Verdichtungsleistung verändern zu können.

Aus der WO 02 25015 A1 ist bekannt, dass weitere Betriebszustände mit einer gegenüber dem ersten Normalbetriebszustand unterschiedlichen Schwingungsfrequenz des Schwingungserregers durch direkte Ansteuerung des Verbrennungsmotors erzeugt wird. Aus thermodynamischen Gründen ist es hingegen sinnvoll, die Betriebszustände des Motors so selten wie möglich zu ändern. Insbesondere Verbrennungsmotoren sind nämlich hinsichtlich Brennstoffverbrauch und Emissionsverhalten häufig nur in einem schmalen DrehzahJband oder nur bei einer bestimmten Drehzahl optimal.

Des Weiteren ist aus der DE 43 43 865 A1 ein Bodenverdichtungsgerät in Form einer Vibrationsplatte mit einer Rütteleinrichtung bekannt. Die Rütteleinrichtung besitzt zwei synchron gegenläufig angetriebene Unwuchtwellen mit gleich schweren Unwuchtgewichten, die bei einer Abweichung von einer gleichphasig gegenläufigen Synchronsteuerung der Unwuchtwellen eine Vortriebskraft erzeugen. Die Unwuchtwellen sind jeweils mit ersten, drehfest mit der jeweiligen Welle verbundenen Unwuchtgewichten und mit zweiten, auf den Wellen schwenkbar gelagerten Unwuchtgewichten versehen. Bei einem Ausführungsbeispiel gemäß der DE 43 43 865 A1 wird über eine Drehrichtungsumkehr des Hydraulikmotors gleichzeitig eine Drehzahländerung des Hydraulikmotors bewirkt. Diese Funktionalität wird mit Hilfe eines 4-2-Wegeventils ermöglicht, dessen Vorlaufleitung (Hauptleitung) und Rücklaufleitung vertauscht werden. In einer zu dem Hydraulikmotor führenden Leitung ist eine konstante Drosselstelle eingebaut, die - wenn sie in der Vorlaufleitung angeordnet ist - zu einem reduzierten Volumenstrom an dem Hydraulikmotor führt und somit eine verringerte Drehzahl des Schwingungserregers bewirkt. Nachteilig ist hier zum einen, dass lediglich zwei verschiedene Drehzahlen realisiert werden können und dass mit der Reduzierung des Volumenstroms zwangsläufig eine Drehrichtungsumkehr des Erregers verbunden ist. Dies führt zwingend zu einem kurzen Stillstand des Erregers, wenn die Drehzahl reduziert (oder auch erhöht) werden soll. Eine Drehzahlveränderung mit sanften Übergängen zwischen den verschiedenen Betriebszuständen ist somit bei der bekannten Vibrationsplatte nicht realisierbar.

Die Aufgabe der Erfindung ist es, ein Bodenverdichtungsgerät und ein Verfahren zum Betrieb des selben vorzuschlagen, welches es ermöglicht, auf einfache und zuverlässige Weise eine Mehrzahl von Betriebszuständen möglichst schnell und möglichst stufenlos (alternativ auch in hinreichend vielen kleinen Stufen) einzustellen. Eine Drehrichtungsumkehr beim Wechsel der Betriebszustände sollte auf jeden Fall vermieden werden.

Die erfindungsgemäße Aufgabe wird durch ein Stromregelventil, insbesondere ein Proportional-Stromregelventil gelöst, das in der Hauptleitung zwischen der Hydraulikpumpe und dem Hydraulikmotor angeordnet ist und mittels dessen der dem Hydraulikmotor zugeführte Volumenstrom der Hydraulikflüssigkeit unter Beibehaltung der jeweiligen Strömungsrichtung mengenmäßig veränderbar ist.

Ebenfalls wird die erfindungsgemäße Aufgabe dadurch gelöst, dass ein Verfahren zur Erzeugung mehrerer Betriebszustände eines Bodenverdichtungsgeräts gemäß den Merkmalen des Oberbegriffs des Verfahrenshauptanspruchs vorgeschlagen wird, welches dadurch gekennzeichnet ist, dass mittels eines. Stromregelventils, insbesondere eines Proportional-Stromregelventils, der dem Hydraulikmotor zugeführte Volumenstrom der Hydraulikflüssigkeit unter Beibehaltung der jeweiligen Strömungsrichtung mengenmäßig verändert und dadurch die Drehzahl des Hydraulikmotors ebenfalls verändert wird und mehrere Betriebszustände des Bodenverdichtungsgerätes erreicht werden.

Unter einem Stromregelventil soll in diesem Zusammenhang eine in der Hauptleitung angeordnete hydraulische Verstelleinrichtung verstanden werden, die den dem Hydraulikmotor zugeführten Volumenstrom unabhängig von dem von der Hydraulikpumpe abgegebenen Volumenstrom unter Beibehaltung der jeweiligen Strömungsrichtung mengenmäßig verändern kann. Für eine solche Aufgabenstellung sind Stromregelventile die üblichen Bauelemente. Dabei kann die Volumenstromveränderung sowohl bei nur einer Drehrichtung des Schwingungserregers als auch bei zwei entgegengesetzten Drehrichtungen wirksam sein, falls dies in Sonderfällen gewünscht ist.

Das Wesen der Erfindung ist somit in der hydraulischen Leistungsregelung zu sehen, von der bislang insbesondere bei Verdichtungsplatten keinerlei Gebrauch gemacht wurde. Gebräuchlich ist lediglich die Steuerung der Motordrehzahl oder eine Schlupfregelung zwischen Antriebsaggregat und Hydraulikpumpe, also eine mechanische Steuerung. In Bezug auf Verdichtungsplatten ist dabei jegliche hydraulische Leistungsregelung bislang nicht realisiert worden, so dass im Rahmen der Erfindung statt des Stromregelventils auch eine geregelte Pumpe oder ein geregelter Motor Verwendung finden können. In allen drei Fällen liegt eine hydraulische Beeinflussung der Drehzahl des Hydraulikmotors vor, um dessen Drehzahl, d.h. auch die Drehzahl des Schwingungserregers und damit die Verdichtungsleistung, zu ändern. Die mechanische Kopplung zwischen Antriebsaggregat und Hydraulikpumpe kann dabei ebenso starr sein wie die Kopplung zwischen Hydraulikmotor und Schwingungserreger.

Bei den allgemein aus dem Stand der Technik bekannten Stromregelventilen kann durch Verstellen eines geeigneten hydraulischen Widerstandes gegen eine Feder der Strömungswiderstand entsprechend vergrößert oder verkleinert und dadurch der Volumenstrom geregelt werden.

Insbesondere bietet die Verwendung eines Proportional-Stromregelventils die Möglichkeit, den Volumenstrom proportional zu einer Stellgröße, etwa einem elektrischen Strom zu ändern.

Eine Weiterbildung der Erfindung besteht darin, dass durch ein 3-Wege-Stromregelventil, der von der Hydraulikpumpe gelieferte Volumenstrom in einen dem Hydraulikmotor zugeführten ersten Teilvolumenstrom und einen dem Tank zugeführten zweiten Teilvolumenstrom aufteilbar ist.

Der Vorteil bei der Verwendung eines 3-Wege-Stromregelventils besteht darin, dass die bei der Drosselung im Stromregelventil entstehende Wärme in den Tank abgeleitet weiden kann. Zudem ist bei einem 3-Wege-Stromregelventil der Druckabfall in dem dem Hydraulikmotor zugeleiteten Teilvolumenstrom (d.h. dem energetisch genutzten Volumenstrom) mit ca. 2 bar relativ gering. Bei einem 3-Wege-Stromregelventil muss im übrigen nur gegen den erforderlichen Lastdruck gearbeitet werden. Der Wirkungsgrad eines 3-Wege-Stromregelventils ist deswegen entsprechend hoch.

Eine Weiterbildung der Erfindung besteht außerdem darin, dass das Stromregelventil, insbesondere das 3-Wege-Proportional-Stromregelventil, durch eine Regelmagnetvorrichtung geregelt ist. Durch die Änderung eines durch die Regelmagnetvorrichtung, etwa einen Proportionalmagneten, fließenden Stroms erfolgt unmittelbar eine Volumenstromänderung, die proportional zur Änderung des elektrischen Stromes ist:

Die Erfindung kann ebenfalls dadurch weitergebildet werden, dass das Stromregelventil durch eine mechanische Regelvorrichtung, eine hydraulische Regelvorrichtung oder eine Kombination aus elektrischen, mechanischen, hydraulischen und/oder magnetischen Mitteln geregelt oder gesteuert ist.

Eine vorteilhafte Weiterbildung sieht außerdem vor, dass eine Steuer- oder Regelvorrichtung mittels eines von einem Messsystem gelieferten Steuerstroms oder einer Steuerspannung steuerbar oder regelbar ist, wobei das Messsystem die Verdichtung des Untergrundes, insbesondere unter dem Bodenverdichtungsgerät, misst.

Das Messsystem, welches die Schwingungen einer Bodenkontakteinheit des Bodenverdichtungsgerätes messen kann, insbesondere die Einwirkungsfrequenz sowie die Amplituden hierzu, liefert ein Maß für die Bodensteifigkeit (den Verdichtungsgrad) des Untergrundes und soll einen Steuerstrom ausgeben, der in die Regelmagnetvorrichtung eingespeist wird. Selbstverständlich ist völlig freigestellt, wie diese Steuergröße geartet ist; festgelegt soll nur sein, dass ein Ergebnis und/oder Zwischenergebnis der Messung des Messsystems zur Steuerstrombildung zu irgendeinem Zeitpunkt für eine wählbare Zeitspanne zur Volumenstromveränderung herangezogen wird.

Eine vorteilhafte Weiterbildung des Verfahrens sieht vor, dass der Hydraulikmotor durch entsprechende Anpassung des ihm zur Verfügung gestellten Volumenstroms in einem Normalbetriebszustand 100 % seiner Nennleistung, in einem Abregelbetriebszustand z.B. 80 % seiner Nennleistung, in einem Messbetriebszustand z.B. 20 % seiner Nennleistung und in einem Ruhebetriebszustand keine Leistung abgibt.

Der Abregelbetriebszustand ist vor allem dazu geeignet, bei schon erreichter maximaler bzw. gewünschter Bodensteifigkeit den Untergrund nicht wieder unbeabsichtigt - zumindest oberflächlich- zu lockern, sondern das Bodenverdichtungsgerät lediglich zu verschieben, d.h. dessen Ort zu ändern. In dem Abregelbetriebszustand ist zudem gewährleistet, dass es nicht zu einem "Springen" des Bodenverdichtungsgerätes, insbesondere des Bodenkontaktelementes, kommen kann. Zudem wird in diesem Betriebszustand das Bodenverdichtungsgerät vor Überlastung geschützt.

Schließlich soll eine Weiterbildung des Verfahrens darin bestehen, dass innerhalb des Messbetriebszustands und/oder des Abregelbetriebszustands Schwingungen der Bodenverdichtungsvorrichtung ermittelt werden und daraus insbesondere eine Schwingungsform aufgenommen wird, aus der unter Einbeziehung von Maschinenparametern der Bodenverdichtungsvorrichtung und der zeitlichen Lage einer die Schwingung erzeugenden Bodenverdichtungskraft, die Bodensteifigkeit (Verdichtungsgrad) ermittelt und zur Bestimmung des Steuerstromes herangezogen wird.

Im Folgenden soll anhand von Ausführungsbeispielen das erfindungsgemäße Bodenverdichtungsgerät näher erläutert werden.

Es zeigt
- Fig. 1: einen Hydraulikplan eines erfindungsgemäßen Bodenverdichtungsgerätes mit Stromregelventil,
- Fig. 1a: einen alternativen Hydraulikplan mit regelbarer Hydraulikpumpe,
- Fig. 1b: einen weiteren alternativen Hydraulikplan mit regelbarem Hydraulikmotor,
- Fig. 2: eine prinzipielle Ansicht einer Messanordnung an einem Bodenkontaktelement.

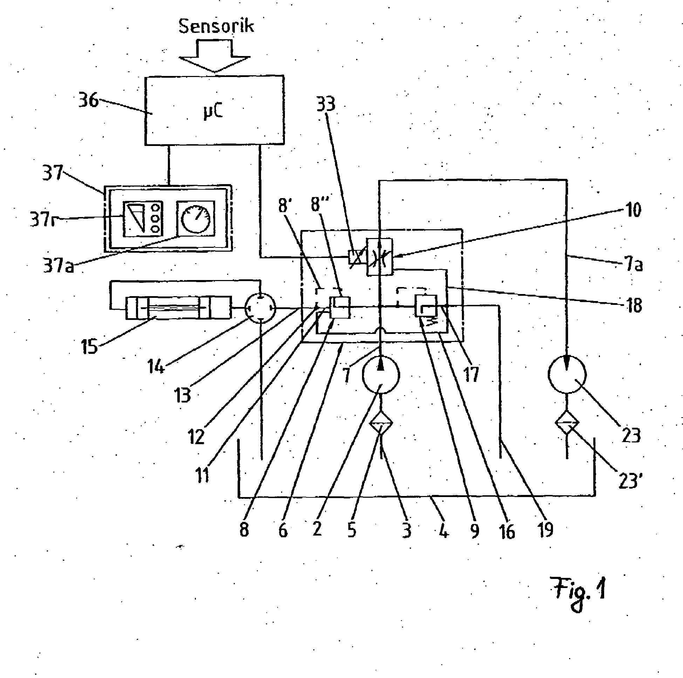

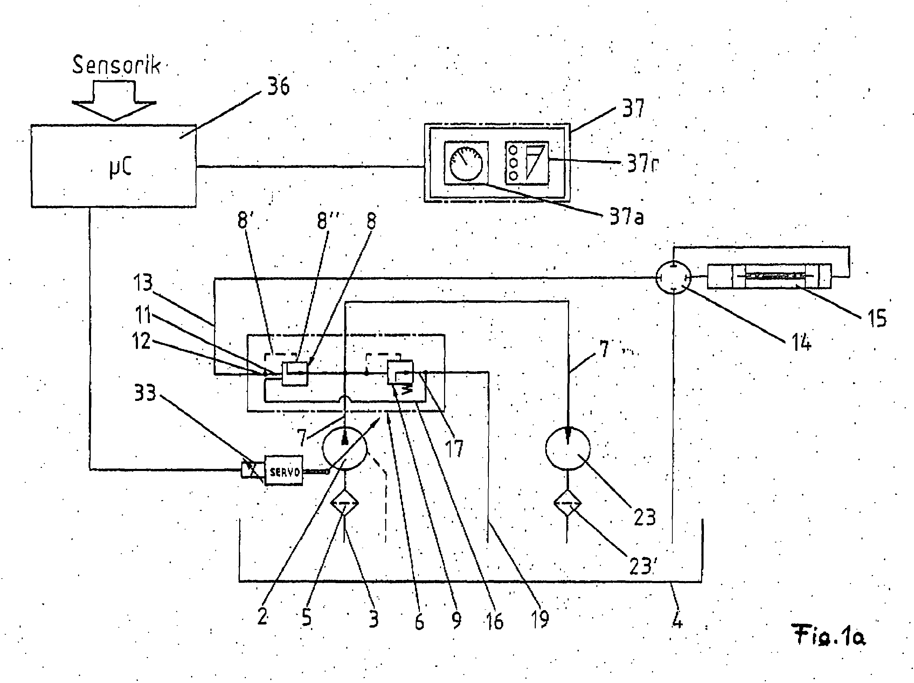

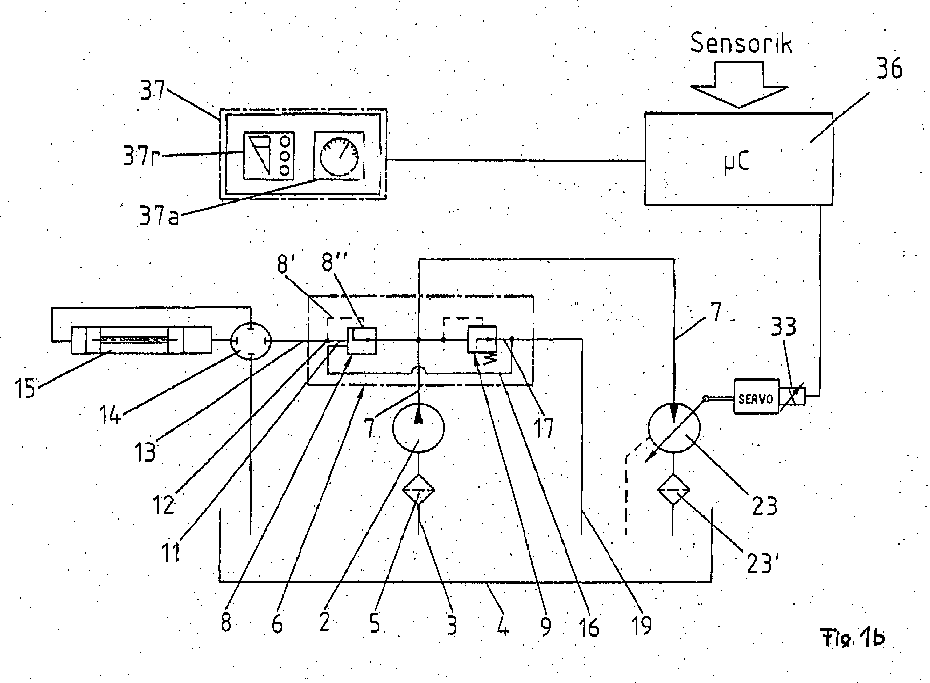

Das im Hydraulikplan der Fig.1 dargestellte Bodenverdichtungsgerät 1 in Form einer Verdichtungsplatte weist einen nicht gezeigten Verbrennungsmotor in Form eines Dieselmotors auf, der über eine ebenfalls nicht gezeigte starre Kupplung eine Hydraulikpumpe 2 antreibt. Die Hydraulikpumpe 2 föxdert Hydraulikflüssigkeit über eine Förderleitung 3 aus einem Tank 4. Die Hydraulikflüssigkeit wird dabei durch einen Saugfilter 5, der in der Förderleitung 3 angeordnet ist, von möglichen Verunreinigungen gereinigt.

Die Hydraulikflüssigkeit wird von der Hydraulikpumpe 2 über eine Hauptleitung 7 in einen Ventilblock 6 gepumpt. In dem Ventilblock 6 verzweigt sich die Hauptleitung 7 und führt zu einem Druckregelventil 8, einem Druckbegrenzungsventil 9 und einem Stromregelventil 10 in Form eines 3-Wege-Proportional-Stromregelventils. Von dem Stromregelventil 10 führt die Hauptleitung 7 in einem weiteren Abschnitt 7a zu einem Hydraulikmotor 23 und von dort über einen Rücklauffilter 23' in den Tank 4.

Von dem Druckregelventil 8, welches den Druck auf 30 bar begrenzt, führt eine Hydraulikleitung 11 zu einer Verzweigung 12, von wo sie sich in eine Zuleitung 13 zu einem hydraulischen Verstellmechanismus 14 zur Verstellung eines hier nicht gezeigten Schwingungserregers mittels eines Stellzylinders 15 und in eine Rücklaufleitung 8' verzweigt, die mit einem Regeleingang 8" des Druckregelventils 8 verbunden ist. Ebenfalls vom Druckregelventil 8 geht eine Tankleitung 16 ab, die mit einer Tankleitung 17 des Druckbegrenzungsventils 9 und einer Tankleitung 18 des Stromregelventils 10 verbunden ist. Über die Tankleitungen 16, 17, 18 fließt die Hydraulikflüssigkeit aus dem Ventilblock 6 über eine gemeinsame weitere Tankleitung 19 zurück in den Tank 4. Das Druckbegrenzungsventil 9 ist für eine Druckbegrenzung auf 180 bar ausgelegt. An das Stromregelventil 10 ist eine magnetische Steuervorrichtung 33, z.B. in Form einer Spule mit Anker, angeschlossen, die mit dem hydraulischen Widerstandselement in dem Stromregelventil gekoppelt ist.

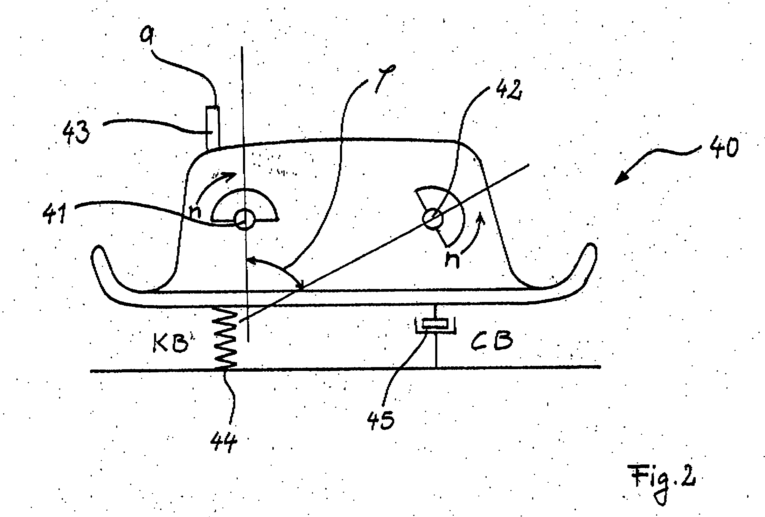

Wie in Fig. 1 gezeigt, wird der Steuerstrom Iₛ für die Steuervorrichtung 33 des Stromregelventils 10 einem Messystem 35, insbesondere einem Mikroprozessor 36 entnommen, welches Geräteparameter (Drehzahlen von Erregerwellen 41, 42 siehe Fig. 2) und Schwingungsparameter einschließlich der Amplituden und Frequenzen der vom Bodenverdichtungsgerät 1 ausgeführten Schwingungen misst oder verwendet.

Auf einer Instrumententafel 37 des Bodenverdichtungsgerätes 1 werden die vom Messsystem 35 gemessenen Relativ- und Absolutwerte der Schwingungen ausgegeben, wobei auf einer Anzeige 37a ein Wert für den gemessenen absoluten Verdichtungsgrad und auf einer Anzeige 37r ein Wert für den relativen Verdichtungsgrad ausgegeben wird.

In das Messsystem 35 kann im übrigen noch mittels eines Vibrationsschalters 38 und eines Messschalters 39 eingegriffen werden. Der Vibrationsschalter 38 schaltet zwischen dem Ruhe und dem Normalbetriebszustand, wobei alternativ auch noch der Abregelzustand manuell schaltbar sein kann.

Ausgehend vom Normalbetriebszustand wird mittels des Messystems 35 ständig der relative Verdichtungsfortschritt einer während der Verdichtung gemessen und der Wert auf der Anzeige 37r angezeigt. Sobald ein Schwellenwert, der proportional zum Verdichtungsfortschritt sein kann, unterschritten wird, dh. sobald kein genügend großer Verdichtungsfortschritt mehr erreicht wird, regelt das Bodenverdichtungsgerät 1 sich mittels des Stromregelventils 10 automatisch in den Abregelbetriebszustand mit gegenüber dem Normalbetriebszustand geringerer abgegebener Leistung des Hydraulikmotors 23 herunter, wobei auch in diesem Zustand ständig eine Relativmessung vorgenommen wird. Falls wieder ein genügend großer Verdichtungsfortschritt, der einen weiteren Schwellenwert überschreitet, gemessen wird, schaltet das Bodenverdichtungsgerät 1 automatisch in den Normalbetriebszustand.

Manuell oder automatisch sind somit die Betriebszustände in der Weise schaltbar, dass vom Messsystem ein entsprechender Steuerstrom Iₛ zur Ansteuerung des Stromregelventils 10 ausgegeben wird. Dadurch wird schließlich, abhängig vom jeweiligen Volumenstrom, vom Hydraulikmotor in einem Normalbetriebszustand seine volle Nennleistung, in einem Abregelbetriebszustand ca. 80 % seiner Nennleistung, in einem Messbetriebszustand ca. 20 % seiner Nennleistung und in einem Ruhebetriebszustand schließlich keine Leistung abgegeben.

Durch den Messschalter 39 kann zwischen einem Absolut- und einem ansonsten Relativmessprogramm des Mikroprozessors 36, das ständig im Hintergrund abläuft, gewechselt werden, wobei für die Absolutmessung vorzugsweise der Messbetriebszustand mit entsprechend niedriger Nennleistung des Hydraulikmotors geeignet ist. Beispielsweise können bei einem nicht weiter zu verdichtenden Boden, die absoluten Endwerte der Verdichtung, z.B. kombiniert mit entsprechenden GPS-Daten, vom Messsystem ausgegeben und optional gespeichert werden.

Die Fig. 1a zeigt einen alternativen Hydraulikplan, bei dem der Unterschied zu dem Hydraulikplan gemäß Fig. 1 darin besteht, dass anstelle des Stromregelventils 10 nunmehr die Hauptleitung 7 durchgängig von der Hydraulikpumpe 2 zu dem Hydraulikmotor 23 ohne Unterbrechung ist. Anstelle einer Hydraulikpumpe mit fester Förderrate ist gemäß Fig. 1a jedoch eine regelbare Hydraulikpumpe 2, d.h. eine solche mit veränderbarem geliefertem Volumenstrom vorhanden. Diese Hydraulikpumpe 2 wird über eine Steuervorrichtung 33 angesteuert, die mit der Verstelleinrichtung 33 gemäß Fig. 1 im Wesentlichen identisch sein kann. Wiederum erhält die Steuervorrichtung 33 ihre Steuersignale von dem Mikroprozessor 36. Die regelbare Hydraulikpumpe 2 ist über eine gestrichelt eingetragene Leckölleitung mit dem Tank verbunden.

Fig. 1b zeigt einen weiteren alternativen Hydraulikplan, bei dem anstelle eines Stromregelventils 10 (Fig. 1) bzw. einer regelbaren Hydraulikpumpe 2 (Fig. 1a) ein regelbarer Hydraulikmotor 23 vorhanden ist. In Abhängigkeit von der Stellung einer Steuervorrichtung 33, wiederum angesteuert durch den Mikroprozessor 36, wird ein mehr oder weniger großer Volumenstrom drucklos in den Tank abgeleitet. Während somit im Falle der Fig. 1a die Hydraulikpumpe 2 aufgrund ihrer Regelbarkeit stets den aktuell vom Hydraulikmotor 23 benötigten Volumenstrom liefert, erhält letztere im Falle der Fig. 1b stets einen konstanten Volumenstrom, der in dem Hydraulikmotor 23 in einen effektiv genutzten Volumenstrom und einen drucklos in den Tank zurückströmenden Rücklaufvolumenstrom aufgeteilt wird.

Die in Fig. 2 gezeigte prinzipielle Messanordnung an einem Bodenkontaktelement 40 des Bodenverdichtungsgeräts 1 sieht eine Winkelmessung eines Winkels ϕ mittels eines nicht gezeigten Winkelsensors vor. Der Winkel ϕ spannt sich zwischen zwei Ebenen, die jeweils den Unwuchtschwerpunkt und die Längsachse einer Erregerwelle 41, 42 schneiden. Zudem werden die Drehzahl n der beiden Erregerwellen 41, 42 jeweils mittels eines ebenfalls nicht gezeigten Drehzahlmessers gemessen. Ein Beschleunigungssensor 43 misst schließlich die Beschleunigung a, die das Bodenkontaktelement 40 durch die von den Erregerwellen auf es übertragenen Schwingungen durchführt. Lediglich zur Verdeutlichung ist die Bodensteifigkeit k_{B} des Untergrundes als Feder 44 und die Dämpfung c_{B} des Untergrundes als Dämpfungselement 45 dargestellt. Beide letztgenannten Parameter werden nicht direkt gemessen, sondern analytisch und/oder numerisch mittels der zuvor genannten und/oder anderer Parameter vom Messsystem 35 berechnet.

### Bezugszeichenliste

- 1: Bodenverdichtungsgerät
- 2: Hydraulikpumpe
- 3: Förderleitung
- 4: Tank
- 5: Saugfilter
- 6: Ventilblock
- 7: Hauptleitung
- 7a: Abschnitt der Hauptleitung
- 8: Druckregelventil
- 8': Rücklaufleitung
- 9: Druckbegrenzungsventil
- 10: Stromregelventil
- 11: Hydraulikleitung
- 12: Verzweigung
- 13: Zuleitung
- 14: Verstellmechanismus
- 15: Stellzylinder
- 16: Tankleitung
- 17: Tankleitung
- 18: Tankleitung
- 19: Tankleitung
- 23: Hydraulikmotor
- 33: Steuervorrichtung
- 36: Mikroprozessor
- 37: Instrumententafel
- 37a: Anzeige füt absolute Messwerte
- 37r: Anzeige füt relative Messwerte
- 38: Vibrationsschalter
- 39: Messschalter
- 40: Schwingungserreger
- 41: Erregerwelle
- 42: Erregertwelle
- 43: Beschleunigungssensor
- 44: Feder
- 45: Dämpfungselement
- I_{V}: Verstellstrom
- I_{R}: Regelstrom
- I_{J}: Strom
- n: Drehzahl
- k_{B}: Bodensteifigkeit
- c_{B}: Dämpfung
- a: Beschleunigung
- ϕ: Winkel

## Patentansprüche

1. Bodenverdichtungsgerät (1) mit einem internen oder externen Antriebsaggregat, insbesondere einem Verbrennungsmotor, einer von diesem antreibbaren Hydraulikpumpe (2), einem Hydraulikmotor (23), der von der Hydraulikpumpe (2) über eine Hauptleitung (7) mit Hydraulikflüssigkeit versorgbar ist und mit dem ein Schwingungserreger antreibbar ist, mit dem das Bodenverdichtungsgerät (1) in Schwingungen versetzbar ist, **gekennzeichnet durch** ein Stromregelventil (10), das in der Hauptleitung (7) zwischen der Hydraulikpumpe (2) und dem Hydraulikmotor (23) angeordnet ist und mittels dessen der dem Hydraulikmotor (23) zugeführte Volumenstrom der Hydraulikflüssigkeit unter Beibehaltung der jeweiligen Strömungsrichtung mengenmäßig veränderbar ist.

2. Verdichtungsplatte (1) mit einem Verbrennungsmotor, einer von diesem antreibbaren Hydraulikpumpe (2), einem Hydraulikmotor (23), der von der Hydraulikpumpe (2) über eine Hauptleitung (7) mit Hydraulikflüssigkeit versorgbar ist und mit dem ein Schwingungserreger antreibbar ist, mit dem eine Bodenplatte in gerichtete Schwingungen versetzbar ist, **gekennzeichnet durch**
a) ein Stromregelventil (10), das in der Hauptleitung (7) zwischen der Hydraulikpumpe (2) und dem Hydraulikmotor (23) angeordnet ist und mittels dessen der dem Hydraulikmotor (23) zugeführte Volumenstrom der Hydraulikflüssigkeit unter Beibehaltung der jeweiligen Strömungsrichtung mengenmäßig veränderbar ist oder
b) eine hinsichtlich ihres abgegebenen Volumenstromes bei konstanter Drehzahl regelbare Hydraulikpumpe (2) oder
c) einen hinsichtlich seiner Drehzahl bei konstantem zugeführtem Volumenstrom regelbaren Hydraulikmotor (23).

3. Bodenverdichtungsgerät (1) nach Anspruch 1 oder 2, **gekennzeichnet durch** ein 3-Wege-Stromregelventil (10), insbesondere ein 3-Wege-Proportional-Stromregelventil (10), mittels dessen der von der Hydraulikpumpe (2) gelieferte Volumenstrom der Hydraulikflüssigkeit in einem dem Hydraulikmotor (23) zugeführten ersten Teilvolumenstrom und einem dem Tank (3) zugeführten zweiten Teilvolumenstrom aufteilbar ist.

4. Bodenverdichtungsgerät (1) nach mindestens einem der Ansprüche 1 bis 3, **dadurch gekennzeichnet, dass** das Stromregelventil (10) durch elektrische, mechanische, hydraulische, magnetische Mittel oder einer Kombination aus diesen geregelt ist.

5. Bodenverdichtungsgerät (1) nach Anspruch 4, **gekennzeichnet durch** eine Regelvorrichtung (33), die mittels eines von einem Messsystem (35) gelieferten Steuerstroms (I_{S}) steuerbar oder regelbar ist, wobei das Messsystem (35) die Verdichtung des Untergrundes, insbesondere unter dem Bodenverdichtungsgerät (1), misst.

6. Verfahren zur Erzeugung mehrerer Betriebszustände eines Bodenverdichtungsgeräts (1) mit einem internen oder externen Antriebsaggregat, insbesondere einem Verbrennungsmotor, einer von diesem antreibbaren Hydraulikpumpe (2), einem Hydraulikmotor (23), der von der Hydraulikpumpe (2) über eine Hauptleitung (7) mit Hydraulikflüssigkeit versorgbar ist und mit dem ein Schwingungserreger antreibbar ist, mit dem das Bodenverdichtungsgerät (1) in Schwingungen versetzbar ist, **dadurch gekennzeichnet, dass** mittels eines Stromregelventils (10) der dem Hydraulikmotor (23) zugeführte Volumenstrom der Hydraulikflüssigkeit unter Beibehaltung der jeweiligen Strömungsrichtung mengenmäßig verändert und **dadurch** die Drehzahl des Hydraulikmotors (23) ebenfalls verändert wird.

7. Verfahren zur Erzeugung mehrerer Betriebszustände einer Verdichtungsplatte (1), mit einem internen oder externen Antriebsaggregat, insbesondere einem Verbrennungsmotor, einer von diesem antreibbaren Hydraulikpumpe (2), einem Hydraulikmotor (23), der von der Hydraulikpumpe (2) über eine Hauptleitung (7) mit Hydraulikflüssigkeit versorgbar ist und mit dem ein Schwingungserreger antreibbar ist, mit dem eine Bodenplatte der Verdichtungsplatte (1) in Schwingungen versetzbar ist, **dadurch gekennzeichnet, dass** entweder mittels eines Stromregelventils (10) der dem Hydraulikmotor (23) zugeführte Volumenstrom der Hydraulikflüssigkeit unter Beibehaltung der jeweiligen Strömungsrichtung mengenmäßig verändert oder mittels einer regelbaren Hydraulikpumpe (2) bei konstanter Pumpendrehzahl der dem Hydraulikmotor zugeführte Volumenstrom der Hydraulikflüssigkeit verändert oder mittels eines regelbaren Hydraulikmotors (23) bei konstantem geliefertem Volumenstrom der Hydraulikflüssigkeit der effektiv in dem Hydraulikmotor (23) in Nutzarbeit umgewandelte Volumenstrom verändert und in allen drei vorgenannten Fällen darüber die Drehzahl des Schwingungserregers verändert wird.

8. Verfahren nach Anspruch 6 oder 7 **dadurch gekennzeichnet, dass** der Hydraulikmotor (23) in einem Normalbetriebszustand seine volle Nennleistung, in einem Abregelbetriebszustand eine reduzierte Leistung, insbesondere das 0,5 bis 0,75-fache seiner Nennleistung, in einem Messbetriebszustand eine weitere reduzierte Leistung, insbesondere das 0,05 bis 0,3-fache seiner Nennleistung und in einem Ruhebetriebszustand keine Leistung abgibt.

9. Verfahren nach einem der Ansprüche 6 bis 8, **dadurch gekennzeichnet, dass** die Betriebszustände abhängig von einem Steuerstrom (Iₛ), der eine Regelvorrichtung (33) des Stromregelventils (10) steuert oder regelt, eingenommen werden, wobei der Regelstrom einem Messsystem (35) entnehmbar ist, das die Verdichtung des Untergrundes unter dem Bodenverdichtungsgerät (1) misst.

10. Verfahren nach Anspruch 8 oder 9, **dadurch gekennzeichnet, dass** innerhalb des Messbetriebszustands und/oder des Abregelbetriebszustands Schwingungen des Bodenverdichtungsgerätes (1) ermittelt werden und daraus insbesondere eine Schwingungsform aufgenommen wird, aus der, unter Einbeziehung von Maschinenparametern des Bodenverdichtungsgeräts (1) und der zeitlichen Lage einer die Schwingung erzeugenden Bodenverdichtungskraft, die Bodensteifigkeit (Verdichtungsgrad) ermittelt wird und zur Bestimmung des Steuerstromes (Iₛ) herangezogen wird.
